# EUROPEAN PATENT APPLICATION

(11) **EP 4 528 145 A1**
(43) Date of publication of application: **26.03.2025**
(21) Application number: 23830725.0
(22) Date of filing: 24.02.2023
(51) Int. Cl.: F17C 9/04, F17C 13/00

(54) **HYDROGEN STATION AND REFRIGERATOR SYSTEM FOR HYDROGEN STATION**

(30) Priority: 29.06.2022 JP 2022104247
(71) Applicant: Mitsubishi Heavy Industries, Ltd., Tokyo 100-8332 (JP)
(72) Inventor: NAKAMICHI, Kenji, Tokyo 100-8332 (JP); TAKATA, Ryo, Tokyo 100-8332 (JP); HARADA, Motoshi, Tokyo 100-8332 (JP)
(74) Representative: Müller Schupfner & Partner Patent- und Rechtsanwaltspartnerschaft mbB (Muc)
(86) International application number: PCT/JP2023/006619
(87) International publication number: WO 2024/004270

(57) **Abstract**

This hydrogen station includes a liquid hydrogen supply pipe for supplying liquid hydrogen from a liquid hydrogen reservoir to a liquid hydrogen pump, and a refrigerator. The hydrogen station is configured to cool the liquid hydrogen supply pipe using cold heat generated in the refrigerator.

## Description

### Technical Field

The present disclosure relates to a hydrogen station and a refrigerator system for a hydrogen station.

The present application claims priority based on Japanese Patent Application No. 2022-104247 filed in Japan on June 29, 2022, the contents of which are incorporated herein by reference.

### Background Art

PTL 1 discloses a configuration of a hydrogen station for filling a fuel cell vehicle or the like with hydrogen. In this hydrogen station, liquid hydrogen supplied from a liquid hydrogen storage tank through a liquid hydrogen supply pipe is pressurized by a liquid hydrogen pump and supplied to an evaporator (vaporizer), and high-pressure hydrogen gas generated in the evaporator is supplied to the fuel cell vehicle or the like through a flow rate controller.

In addition, in the hydrogen station disclosed in PTL 1, before filling a fuel cell vehicle or the like with hydrogen, liquid hydrogen is supplied from the liquid hydrogen storage tank to the liquid hydrogen supply pipe, the liquid hydrogen pump, and the vaporizer for cooling (pre-cooling) the liquid hydrogen supply pipe and the liquid hydrogen pump in advance, and low temperature gas from the vaporizer is returned to the liquid hydrogen storage tank, so that the loss of hydrogen gas due to the pre-cooling is reduced.

### Citation List

### Patent Literature

[PTL 1] Japanese Patent No. 5707043

### Summary of Invention

### Technical Problem

In the hydrogen station disclosed in PTL 1, the loss of hydrogen gas due to pre-cooling of a liquid hydrogen supply pipe or the like can be reduced. However, the liquid hydrogen supplied to the liquid hydrogen supply pipe or the like is vaporized into hydrogen gas (boil-off gas) due to pre-cooling of a liquid hydrogen supply pipe or the like, and thus the boil-off gas needs to be compressed by a compressor different from the liquid hydrogen pump in order to supply the boil-off gas to a fuel cell vehicle or the like. In a case where the boil-off gas is compressed by a compressor, the compression power per mole of hydrogen is likely to be larger than in a case where the liquid hydrogen is compressed by the liquid hydrogen pump, and the energy efficiency of the hydrogen station is reduced.

In view of the above circumstances, an object of the at least one embodiment of the present disclosure is to provide a hydrogen station and a refrigerator system for a hydrogen station that can realize high energy efficiency by suppressing generation of boil-off gas in a liquid hydrogen supply pipe.

### Solution to Problem

In order to achieve the above object, a hydrogen station according to at least one embodiment of the present disclosure includes a liquid hydrogen supply pipe that supplies liquid hydrogen from a liquid hydrogen storage tank to a liquid hydrogen pump; and a refrigerator, in which the liquid hydrogen supply pipe is configured to be cooled using cooling energy generated by the refrigerator.

In order to achieve the above object, a refrigerator system for a hydrogen station according to at least one embodiment of the present disclosure is a refrigerator system for a hydrogen station for cooling a liquid hydrogen supply pipe of a hydrogen station, the system includes a refrigerator; a heat exchange unit configured to cool hydrogen gas by exchanging heat with a refrigerant of the refrigerator; a cooling hydrogen gas supply pipe configured to supply the hydrogen gas cooled by the heat exchange unit to the liquid hydrogen supply pipe; and a cooling hydrogen gas recovery pipe configured to recover the hydrogen gas passing through the liquid hydrogen supply pipe and return the hydrogen gas to the heat exchange unit.

### Advantageous Effects of Invention

According to at least one embodiment of the present disclosure, a hydrogen station and a refrigerator system for a hydrogen station that can realize high energy efficiency by suppressing generation of boil-off gas in a liquid hydrogen supply pipe are provided.

### Brief Description of Drawings

Fig. 1 is a diagram showing a schematic configuration of a hydrogen station 2 according to an embodiment.
Fig. 2 is a block diagram showing an example of a hardware configuration of a control device 23.
Fig. 3 is a schematic view showing a refrigerator system 22A that is an example of a configuration of the refrigerator system 22.
Fig. 4 is a diagram showing an example of a cross-sectional configuration of a liquid hydrogen supply pipe 6 that can be applied to the refrigerator system 22A.
Fig. 5 is a diagram showing a relationship between a length L1 of a liquid hydrogen supply pipe 6 from a liquid hydrogen storage tank 4 to a liquid hydrogen pump 8 and a length L2 of a liquid hydrogen supply pipe portion 53.
Fig. 6 is a schematic view showing a refrigerator system 22B that is an example of a configuration of the refrigerator system 22.
Fig. 7 is a diagram showing an example of a cross-sectional configuration of the liquid hydrogen supply pipe 6 that can be applied to the refrigerator system 22B.
Fig. 8 is a diagram showing the relationship between the length L1 of the liquid hydrogen supply pipe 6 from the liquid hydrogen storage tank 4 to the liquid hydrogen pump 8 and a length L3 of a section of the liquid hydrogen supply pipe 6 provided with a pre-cooling line 62.
Fig. 9 is a schematic view showing a modification example of the hydrogen station 2.
Fig. 10 is a schematic view for describing a case where a heat exchange unit 66 is provided in a cooling hydrogen gas recovery pipe 55.
Fig. 11 is a schematic view for describing a case in which the heat exchange unit 66 is provided in a pipe 51.
Fig. 12 is a schematic view for describing a modification example of the refrigerator system 22A.
Fig. 13 is a schematic view showing another modification example of the hydrogen station 2.
Fig. 14 is a schematic view showing still another modification example of the hydrogen station 2.

### Description of Embodiments

Hereinafter, some embodiments of the present disclosure will be described with reference to the accompanying drawings. Dimensions, materials, shapes, relative disposition, and the like of constituents described as the embodiments or illustrated in the drawings are not intended to limit the scope of the invention thereto but are merely simple descriptive examples.

For example, an expression representing a relative or absolute arrangement such as "in a certain direction", "along a certain direction", "parallel", "orthogonal", "center", "concentric", or "coaxial" does not strictly represent only such an arrangement, but also a tolerance or a state of being relatively displaced with an angle or a distance to the extent that the same function can be obtained.

For example, an expression such as "identical", "equal", or "homogeneous" representing a state where things are equal to each other does not strictly represent only the equal state, but also a tolerance or a state where there is a difference to the extent that the same function can be obtained.

For example, an expression representing a shape such as a quadrangular shape or a cylindrical shape does not represent only a shape such as a quadrangular shape or a cylindrical shape in a geometrically strict sense, but also a shape including an uneven portion, a chamfered portion, and the like within a range in which the same effect can be obtained.

Meanwhile, the expressions "being provided with", "comprising", "including", or "having" one component are not exclusive expressions excluding the presence of other components.

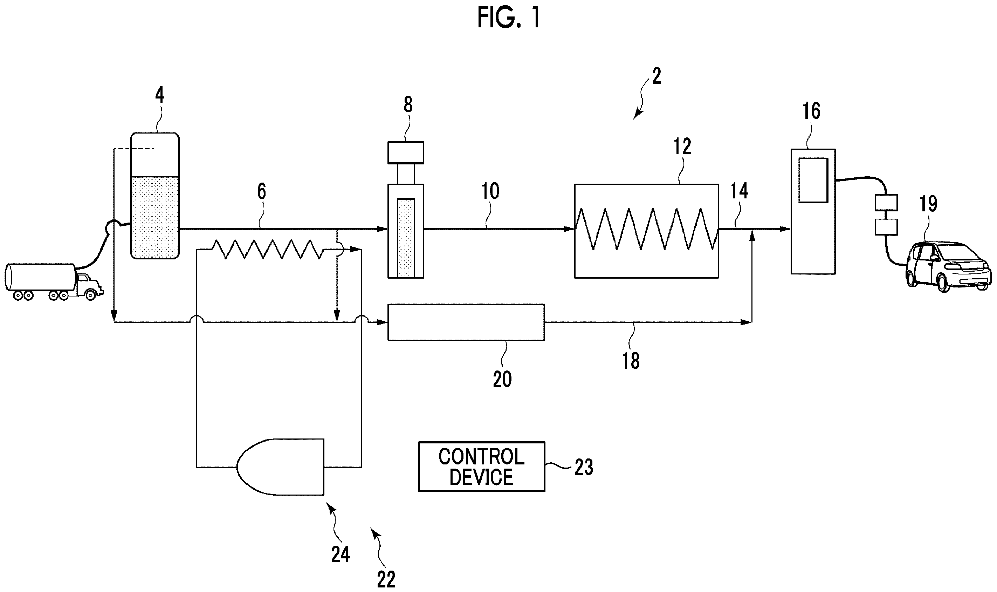

Fig. 1 is a diagram showing a schematic configuration of a hydrogen station 2 according to an embodiment.

As shown in Fig. 1, the hydrogen station 2 includes a liquid hydrogen storage tank 4, a liquid hydrogen supply pipe 6, a liquid hydrogen pump 8, a liquid hydrogen supply pipe 10, an evaporator 12 (heater), a hydrogen gas supply pipe 14, a dispenser 16, a BOG recovery line 18, a compressor 20 (BOG recovery device), a refrigerator system 22, and a control device 23.

The liquid hydrogen storage tank 4 is configured to store liquid hydrogen. The liquid hydrogen storage tank 4 is filled and stores liquid hydrogen transported by, for example, a transport vehicle such as a hydrogen lorry or a hydrogen trailer.

The liquid hydrogen supply pipe 6 connects the liquid hydrogen storage tank 4 and the liquid hydrogen pump 8, and is configured to supply the liquid hydrogen stored in the liquid hydrogen storage tank 4 to the liquid hydrogen pump 8 from the liquid hydrogen storage tank 4. The temperature and pressure of the liquid hydrogen supplied from the liquid hydrogen storage tank 4 to the liquid hydrogen supply pipe 6 are not particularly limited, but may be, for example, approximately -253°C and 0.1 MPa.

The liquid hydrogen pump 8 is configured to pressurize the liquid hydrogen supplied from the liquid hydrogen storage tank 4 through the liquid hydrogen supply pipe 6. The temperature and pressure of the liquid hydrogen discharged from the liquid hydrogen pump 8 are not particularly limited, but may be, for example, approximately - 220°C and 90 MPa. In addition, by pressurizing the liquid hydrogen using the liquid hydrogen pump 8, the compression power can be reduced as compared with a case in which the hydrogen gas is pressurized using a compressor, and the configuration of the hydrogen station 2 can be reduced in size, which is advantageous even in a case of being installed underground. In addition, since the density of the liquid hydrogen is higher than that of the hydrogen gas, it is easy to cope with an increase in capacity.

The liquid hydrogen supply pipe 10 connects the liquid hydrogen pump 8 and the evaporator 12, and is configured to supply the liquid hydrogen discharged from the liquid hydrogen pump 8 to the evaporator 12.

The evaporator 12 is configured to evaporate the liquid hydrogen supplied from the liquid hydrogen supply pipe 10 by heat exchange to generate hydrogen gas. The temperature and the pressure of the hydrogen gas supplied from the evaporator 12 to the liquid hydrogen supply pipe 10 are not particularly limited, but may be, for example, about 90 MPa at normal temperature or normal temperature or lower.

The hydrogen gas supply pipe 14 connects the evaporator 12 and the dispenser 16, and is configured to supply the high-pressure hydrogen gas generated in the evaporator 12 to the dispenser 16.

The hydrogen gas supplied from the evaporator 12 to the dispenser 16 through the hydrogen gas supply pipe 14 is supplied to the hydrogen receiving container 19 of a fuel cell vehicle or the like by controlling the flow rate in the dispenser 16.

The BOG recovery line 18 connects the liquid hydrogen storage tank 4 and the hydrogen gas supply pipe 14. A compressor 20 as a BOG recovery device is provided in the BOG recovery line 18. The BOG recovery line 18 is configured to supply the hydrogen gas (boil-off gas) vaporized in the liquid hydrogen storage tank 4 to the compressor 20 and to supply the hydrogen gas pressurized by the compressor 20 to the hydrogen gas supply pipe 14. The BOG recovery line 18 is also connected to the liquid hydrogen supply pipe 6 of the upstream of the compressor 20, and supplies the boil-off gas in the liquid hydrogen supply pipe 6 to the compressor 20 in a case where the boil-off gas is present in the liquid hydrogen supply pipe 6.

The refrigerator system 22 includes a refrigerator 24 that cools the liquid hydrogen supply pipe 6, and is configured to cool the liquid hydrogen supply pipe 6 using the cooling energy generated by the refrigerator 24.

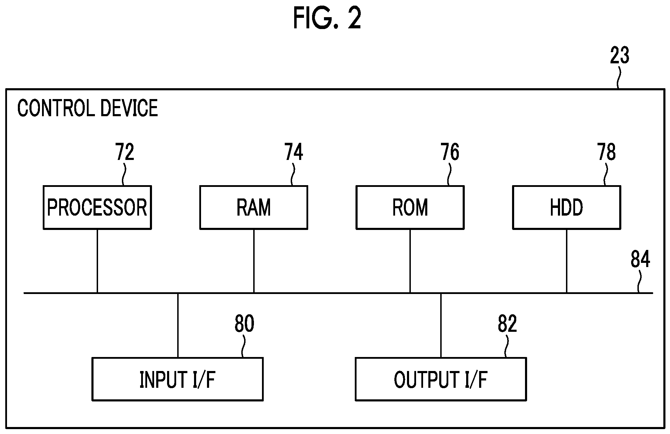

The control device 23 is configured to control each unit of the hydrogen station 2, and the control contents of the control device 23 will be described below. As shown in Fig. 2, the control device 23 is configured using a computer including, for example, a processor 72, a random access memory (RAM) 74, a read only memory (ROM) 76, a hard disk drive (HDD) 78, an input I/F 80, and an output I/F 82 that are connected to each other through a bus 84. The hardware configuration of the control device 23 is not limited to the above and may be configured with a combination of a control circuit and a storage device. In addition, the control device 23 is configured by executing a program for implementing each function of the control device 23 via the computer. Functions of each unit in the control device 23 described below are implemented by loading the program stored in the ROM 76 into the RAM 74 and executing the program via the processor 72 and reading and writing data in the RAM 74 and in the ROM 76.

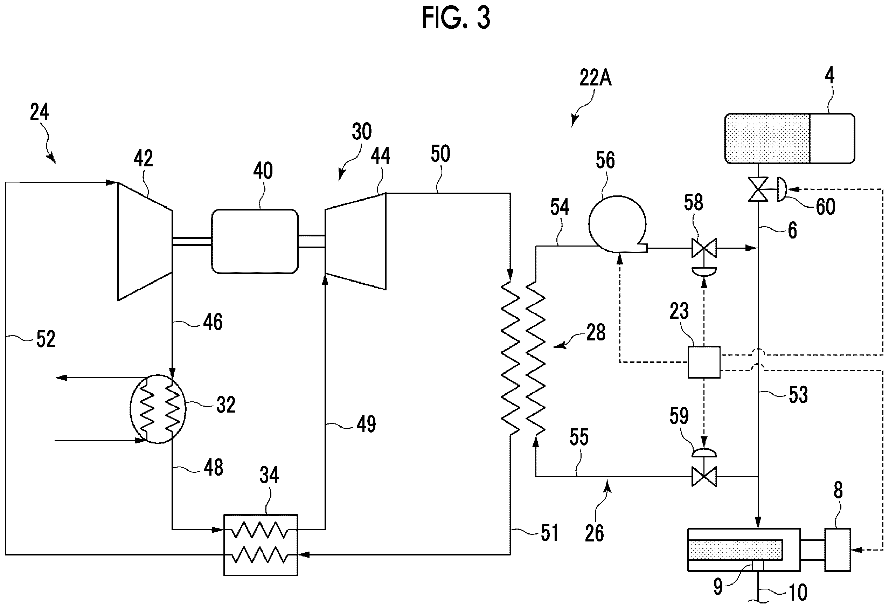

Fig. 3 is a schematic view showing a refrigerator system 22A that is an example of a configuration of the refrigerator system 22.

In the example shown in Fig. 3, the refrigerator system 22A includes a refrigerator 24 of a Brayton cycle system, a circulation line 26 for circulating hydrogen gas, and a heat exchanger 28 (first heat exchange unit) configured to cool the hydrogen gas in the circulation line 26 by heat exchange with a refrigerant of the refrigerator 24.

The refrigerator 24 includes a turbine unit 30, a water-cooled heat exchanger 32, a regenerative heat exchanger 34, and a pipe that connects the turbine unit 30, the water-cooled heat exchanger 32, and the regenerative heat exchanger 34 to each other.

The turbine unit 30 includes a motor 40, a compressor 42, and an expansion turbine 44. The compressor 42 and the expansion turbine 44 are connected to a rotary shaft of the motor 40 and are rotated coaxially. An outlet side of the compressor 42 is connected to one end of the pipe 46. The other end of the pipe 46 is connected to an inlet of the high-temperature side flow path of the water-cooled heat exchanger 32. An outlet of the high-temperature side flow path is connected to one end of the pipe 48. The other end of the pipe 48 is connected to an inlet of the high-temperature side flow path of the regenerative heat exchanger 34. An outlet of the high-temperature side flow path is connected to one end of the pipe 49. The other end of the pipe 49 is connected to an inlet of the expansion turbine 44. An outlet of the expansion turbine 44 is connected to one end of the pipe 50. The other end of the pipe 50 is connected to an inlet of the low-temperature side flow path of the heat exchanger 28. An outlet of the low-temperature side flow path is connected to one end of the pipe 51. The other end of the pipe 51 is connected to an inlet of the low-temperature side flow path of the regenerative heat exchanger 34. An outlet of the low-temperature side flow path is connected to one end of the pipe 52. The other end of the pipe 52 is connected to an inlet of the compressor 42.

The refrigerator 24 having such a configuration operates as follows. The refrigerant having a dew point lower than the temperature of the portion where the temperature is the lowest during the operation (for example, nitrogen or air) is filled as the operating gas of the refrigerator 24 in the refrigerant circulation system (path including the pipes 46, 48, 49, 50, 51, and 52). In a case where the motor 40 is driven, the compressor 42 and the expansion turbine 44 are rotated. The compressor 42 sucks the refrigerant in the pipe 52, compresses the refrigerant, and discharges the refrigerant to the pipe 46. The compressed refrigerant removes heat by being subjected to heat exchange with cooling water having a lower temperature in the water-cooled heat exchanger 32. The heat-removed refrigerant is subjected to heat exchange with the refrigerant that flows from the pipe 51 in the regenerative heat exchanger 34. The refrigerant exited from the regenerative heat exchanger 34 is expanded in the expansion turbine 44 to become a refrigerant having a low temperature, and is supplied to the pipe 50. The refrigerant of the pipe 50 cools the hydrogen gas by performing heat exchange with the hydrogen gas flowing through the circulation line 26 in the heat exchanger 28. The refrigerant exited from the heat exchanger 28 is introduced into the regenerative heat exchanger 34, is subjected to heat exchange with the refrigerant introduced from the pipe 48, and then flows into the pipe 52.

The circulation line 26 includes a liquid hydrogen supply pipe portion 53 which is a section of a part of the liquid hydrogen supply pipe 6, a cooling hydrogen gas supply pipe 54 which connects an outlet of the hydrogen gas in the heat exchanger 28 (outlet of the high-temperature side flow path) and the liquid hydrogen supply pipe portion 53, and a cooling hydrogen gas recovery pipe 55 which connects an inlet of the hydrogen gas in the heat exchanger 28 (inlet of the high-temperature side flow path) and the liquid hydrogen supply pipe portion 53. In the example illustrated in the drawing, the cooling hydrogen gas recovery pipe 55 is connected to the liquid hydrogen supply pipe 6 of the downstream of the liquid hydrogen supply pipe 6 from the position where the liquid hydrogen supply pipe 6 and the cooling hydrogen gas supply pipe 54 are connected. The cooling hydrogen gas supply pipe 54 supplies the hydrogen gas cooled by the heat exchanger 28 to the liquid hydrogen supply pipe portion 53. The cooling hydrogen gas recovery pipe 55 is configured to recover the hydrogen gas (the hydrogen gas supplied from the cooling hydrogen gas supply pipe 54 to the liquid hydrogen supply pipe portion 53) passing through the liquid hydrogen supply pipe portion 53 and return the hydrogen gas to the heat exchanger 28. As described above, the circulation line 26 is configured with the cooling hydrogen gas supply pipe 54, the liquid hydrogen supply pipe portion 53, the cooling hydrogen gas recovery pipe 55, and the high-temperature side flow path (hydrogen gas-side flow path) of the heat exchanger 28.

In the example illustrated in the drawing, the refrigerator system 22A includes a hydrogen blower 56 (blower) for circulating hydrogen gas in the circulation line 26, and the hydrogen blower 56 is provided in the cooling hydrogen gas supply pipe 54. In addition, the refrigerator system 22A further includes a cooling hydrogen gas supply valve 58 provided in the cooling hydrogen gas supply pipe 54 and a cooling hydrogen gas recovery valve 59 provided in the cooling hydrogen gas recovery pipe 55. In addition, the hydrogen station 2 further includes a liquid hydrogen supply valve 60 that is provided upstream of the position where the cooling hydrogen gas supply pipe 54 is connected to the liquid hydrogen supply pipe 6.

In the hydrogen station 2, the control device 23 executes a pre-cool mode for cooling (pre-cooling) the liquid hydrogen supply pipe 6 and the liquid hydrogen pump 8 in advance before starting operation of the liquid hydrogen pump 8.

In the pre-cool mode, the control device 23 controls the liquid hydrogen supply valve 60 to be in a closed state and controls each of the cooling hydrogen gas supply valve 58 and the cooling hydrogen gas recovery valve 59 to be in an open state. Further, the control device 23 drives the motor 40 and the hydrogen blower 56 in a state where the operation of the liquid hydrogen pump 8 is stopped in the pre-cool mode. Accordingly, in a state where the supply of the liquid hydrogen from the liquid hydrogen storage tank 4 to the liquid hydrogen pump 8 is stopped, the hydrogen gas remaining in the liquid hydrogen supply pipe 6 can be circulated in the circulation line 26 by the hydrogen blower 56. Accordingly, since the low-temperature hydrogen gas cooled by heat exchange with the refrigerant of the refrigerator 24 in the heat exchanger 28 circulates through the circulation line 26, the liquid hydrogen supply pipe 6 can be cooled. **In** addition, a check valve 9 for preventing backflow is provided in the liquid hydrogen pump 8, and since a difference pressure between the front and rear of the check valve 9 in the pre-cool mode is smaller than a minimum operating difference pressure (threshold value of the difference pressure before and after the check valve 9 is opened) of the check valve 9, hydrogen gas does not flow from the liquid hydrogen supply pipe 6 to the liquid hydrogen supply pipe 10 in the pre-cool mode.

The control device 23 executes the pre-cool mode to complete the pre-cooling of the liquid hydrogen supply pipe 6, and then executes the normal operation mode. The control device 23 stops the operation of the hydrogen blower 56 and controls each of the cooling hydrogen gas supply valve 58 and the cooling hydrogen gas recovery valve 59 to be in a closed state in the normal operation mode. Further, the control device 23 controls the liquid hydrogen supply valve 60 to be in the open state and operates the liquid hydrogen pump 8 in the normal operation mode. Accordingly, the liquid hydrogen can be supplied from the liquid hydrogen storage tank 4 to the liquid hydrogen pump 8 through the liquid hydrogen supply pipe 6, and the inflow of the liquid hydrogen from the liquid hydrogen supply pipe 6 to the cooling hydrogen gas supply pipe 54 and the cooling hydrogen gas recovery pipe 55 can be prevented.

As described above, in the hydrogen station 2, the liquid hydrogen supply pipe 6 can be cooled (pre-cooled) by using the cooling energy generated by the refrigerator 24 before operating the liquid hydrogen pump 8. Therefore, as compared with the method of pre-cooling in the related art that the liquid hydrogen is flowed from the liquid hydrogen storage tank 4 to the liquid hydrogen supply pipe 6 for pre-cooling the liquid hydrogen supply pipe 6, it is possible to suppress the generation of the boil-off gas due to the vaporization of the liquid hydrogen in the liquid hydrogen supply pipe 6, and it is possible to realize high energy efficiency of the hydrogen station.

In addition, in a case of performing the pre-cooling of the liquid hydrogen supply pipe 6, by circulating the hydrogen gas remaining in the liquid hydrogen supply pipe 6 in the circulation line 26, the hydrogen gas can be cooled by the heat exchanger 28 using the refrigerant of the refrigerator 24, and the cooled hydrogen gas can be caused to flow into the liquid hydrogen supply pipe 6 to cool the liquid hydrogen supply pipe 6. Therefore, for example, the refrigerant of the refrigerator 24 can be prevented from affecting the downstream of the liquid hydrogen supply pipe 6 as compared with a case where the refrigerant of the refrigerator 24 is supplied into the liquid hydrogen supply pipe 6 for pre-cooling the liquid hydrogen supply pipe 6.

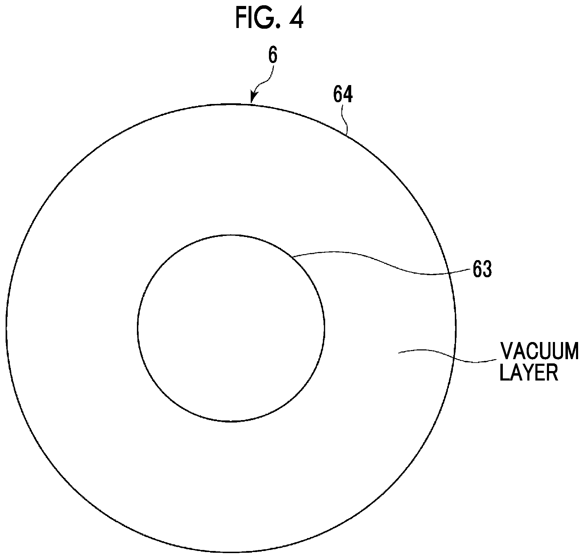

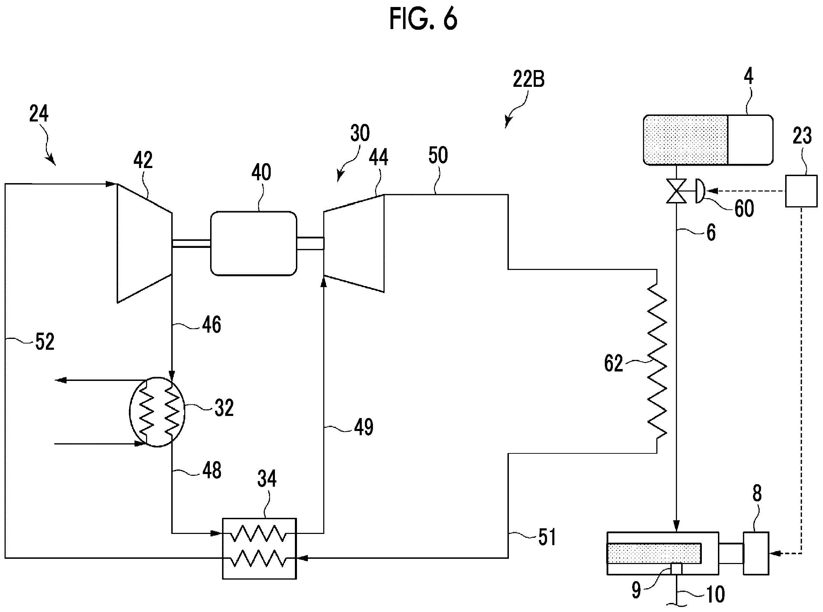

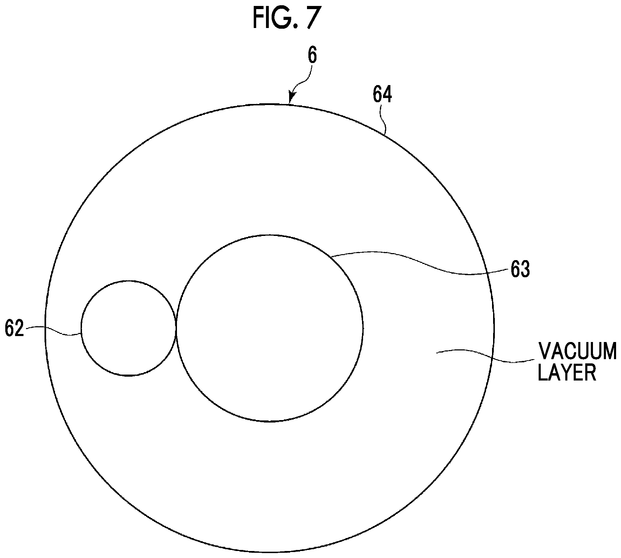

In some embodiments, the liquid hydrogen supply pipe 6 shown in Fig. 3 may have a double pipe structure including, for example, an inner pipe 63 (liquid hydrogen line) for feeding liquid hydrogen and an outer pipe 64 that covers the inner pipe 63, as shown in Fig. 4, and a space between the inner pipe 63 and the outer pipe 64 may be a vacuum layer as the heat insulating layer. In this case, the cooling hydrogen gas supply pipe 54 is connected to the liquid hydrogen supply pipe 6 so as to supply the hydrogen gas to the inner pipe 63, and the cooling hydrogen gas recovery pipe 55 is connected to the liquid hydrogen supply pipe 6 so as to recover the hydrogen gas from the inner pipe 63. As described above, with the configurations shown in Figs. 3 and 4, the structure of the liquid hydrogen supply pipe 6 can be simplified as compared with the configurations of Figs. 6 and 7 to be described later by providing the circulation line 26 through which hydrogen gas can be circulated.

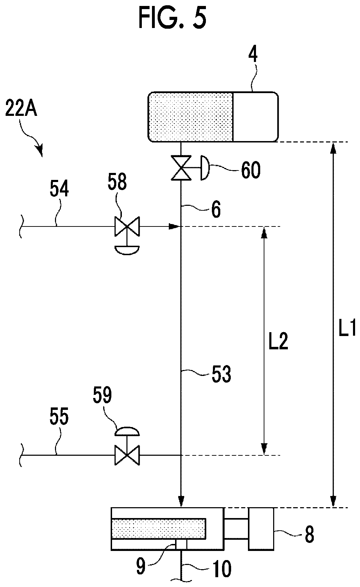

In some embodiments, for example, as shown in Fig. 5, in a case in which the length of the liquid hydrogen supply pipe 6 from the liquid hydrogen storage tank 4 to the liquid hydrogen pump 8 is denoted by L1 and the length of the liquid hydrogen supply pipe portion 53 is denoted by L2, the refrigerator system 22A may satisfy L2/L1 > 0.5, more preferably L2/L1 > 0.7, and still more preferably L2/L1 > 0.8. As a result, in a case of performing the pre-cooling of the liquid hydrogen supply pipe 6, the length of the section cooled by the hydrogen gas in the liquid hydrogen supply pipe 6 (the length of the liquid hydrogen supply pipe portion 53) can be increased, and the liquid hydrogen supply pipe 6 can be efficiently cooled. Therefore, it is possible to effectively cool the liquid hydrogen supply pipe 6 while suppressing the generation of the boil-off gas in the liquid hydrogen supply pipe 6. The length of the liquid hydrogen supply pipe portion 53 means a length from a position where the cooling hydrogen gas supply pipe 54 in the liquid hydrogen supply pipe 6 is connected to a position where the cooling hydrogen gas recovery pipe 55 is connected.

Fig. 6 is a schematic view showing a refrigerator system 22B that is an example of a configuration of the refrigerator system 22. Regarding the configuration shown in Fig. 6, the same reference numerals as the components of the refrigerator system 22A shown in Fig. 3 are used to show the same components as the components of the refrigerator system 22A shown in Fig. 3, and the description thereof will be omitted unless otherwise noted.

The refrigerator system 22B shown in Fig. 6 is different from the refrigerator system 22A in that the refrigerator system 22B does not include the circulation line 26 and the refrigerator 24 of the refrigerator system 22B includes a pre-cooling line 62 provided along a section of a part of the liquid hydrogen supply pipe 6.

**In** the configuration shown in Fig. 6, the outlet of the expansion turbine 44 is connected to one end of the pipe 50. The other end of the pipe 50 is connected to an inlet of the pre-cooling line 62. An outlet of the pre-cooling line 62 is connected to one end of the pipe 51. The other end of the pipe 51 is connected to an inlet of the low-temperature side flow path of the regenerative heat exchanger 34.

**In** the refrigerator system 22B, the low-temperature refrigerant (nitrogen or air) exiting the expansion turbine 44 is supplied to the pre-cooling line 62 through the pipe 50, and the liquid hydrogen supply pipe 6 can be cooled by flowing the low-temperature refrigerant in the pre-cooling line 62.

In the configuration shown in Fig. 6, the control device 23 executes a pre-cool mode for cooling (pre-cooling) the liquid hydrogen supply pipe 6 and the liquid hydrogen pump 8 in advance before starting the operation of the liquid hydrogen pump 8.

The control device 23 controls the liquid hydrogen supply valve 60 to be in a closed state in the pre-cool mode. Further, the control device 23 drives the motor 40 in a state where the operation of the liquid hydrogen pump 8 is stopped in the pre-cool mode. Accordingly, in a state where the supply of the liquid hydrogen from the liquid hydrogen storage tank 4 to the liquid hydrogen pump 8 is stopped, the liquid hydrogen supply pipe 6 can be cooled by flowing the low-temperature refrigerant of the refrigerator 24 into the pre-cooling line 62.

**In** addition, the control device 23 executes the pre-cool mode to complete the pre-cooling of the liquid hydrogen supply pipe 6, and then executes the normal operation mode. The control device controls the liquid hydrogen supply valve 60 to be in the open state and operates the liquid hydrogen pump 8 in the normal operation mode. Accordingly, it is possible to supply the liquid hydrogen from the liquid hydrogen storage tank 4 to the liquid hydrogen pump 8 through the liquid hydrogen supply pipe 6.

According to the hydrogen station 2 including the above-described refrigerator system 22B, the liquid hydrogen supply pipe 6 can be cooled (pre-cooled) by using the cooling energy generated by the refrigerator 24 before operating the liquid hydrogen pump 8. Therefore, as compared with the method of pre-cooling in the related art that the liquid hydrogen is flowed from the liquid hydrogen storage tank 4 to the liquid hydrogen supply pipe 6 for pre-cooling the liquid hydrogen supply pipe 6, it is possible to suppress the generation of the boil-off gas due to the vaporization of the liquid hydrogen in the liquid hydrogen supply pipe 6, and it is possible to realize high energy efficiency of the hydrogen station.

In addition, as compared with the configuration shown in Fig. 3, since it is not necessary to provide the circulation line 26 and the like for hydrogen gas, it is possible to suppress the increase in size of the equipment for performing the pre-cooling of the liquid hydrogen supply pipe 6. In addition, for example, the refrigerant of the refrigerator 24 can be prevented from affecting the downstream of the liquid hydrogen supply pipe 6 as compared with a case where the refrigerant of the refrigerator 24 is supplied into the liquid hydrogen supply pipe 6 for pre-cooling the liquid hydrogen supply pipe 6.

In some embodiments, for example, as shown in Fig. 7, the liquid hydrogen supply pipe 6 includes an inner pipe 63 (liquid hydrogen line) for feeding the liquid hydrogen and an outer pipe 64 that covers the inner pipe 63, and a space between the inner pipe 63 and the outer pipe 64 may be a vacuum layer as the heat insulating layer. In this case, the pre-cooling line 62 is provided inside the outer pipe 64 adjacent to the inner pipe 63 along the inner pipe 63. The pre-cooling line 62 may be provided in a spiral shape along an outer peripheral surface of the inner pipe 63 so as to be wound around the inner pipe 63, or may be provided along the inner pipe 63 so as to extend parallel to the inner pipe 63.

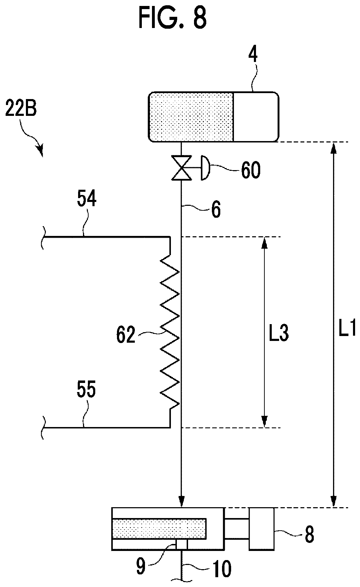

In some embodiments, for example, as shown in Fig. 8, in a case in which the length of the liquid hydrogen supply pipe 6 from the liquid hydrogen storage tank 4 to the liquid hydrogen pump 8 is denoted by L1 and the length of the section provided with the pre-cooling line 62 in the liquid hydrogen supply pipe 6 is denoted by L3, the refrigerator system 22A may satisfy L3/L1 > 0.5, more preferably L3/L1 > 0.7, and still more preferably L3/L1 > 0.8. As a result, in a case of performing the pre-cooling of the liquid hydrogen supply pipe 6, the length of the section cooled by the pre-cooling line 62 in the liquid hydrogen supply pipe 6 can be increased, and the liquid hydrogen supply pipe 6 can be efficiently cooled.

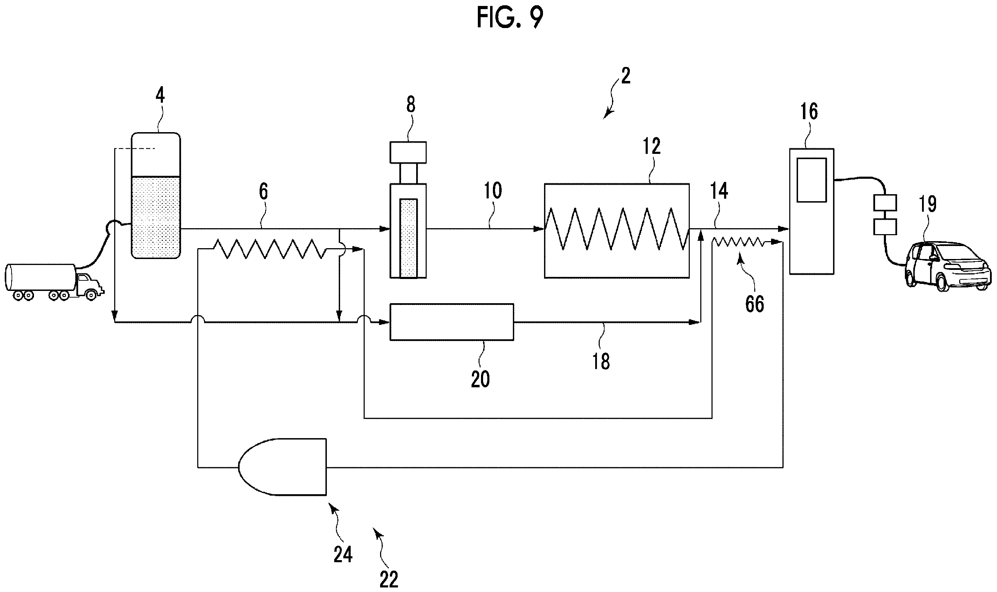

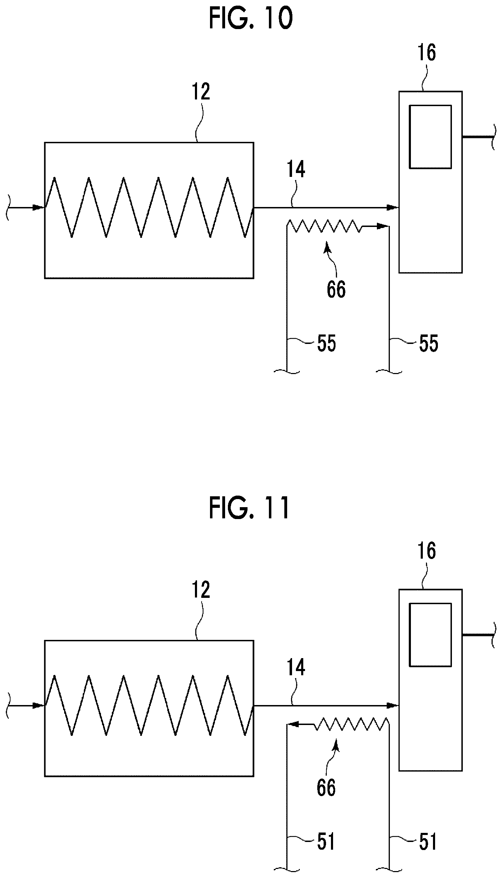

In some embodiments, for example, as shown in Fig. 9, the hydrogen station 2 may further include a heat exchange unit 66 configured to cool the hydrogen gas flowing through the hydrogen gas supply pipe 14 by heat exchange. As shown in Fig. 10, for example, the heat exchange unit 66 may be provided in the hydrogen gas for cooling recovery pipe 55 (see Fig. 3), and in this case, the heat exchange unit 66 may be configured by, for example, winding the section of a part of the cooling hydrogen gas recovery pipe 55 around the hydrogen gas supply pipe 14. Accordingly, it is possible to cool the hydrogen gas flowing through the hydrogen gas supply pipe 14 by using the low-temperature hydrogen gas recovered from the liquid hydrogen supply pipe portion 53 (see Fig. 3) in the pre-cool mode.

In addition, in another embodiment, as shown in Fig. 11, the heat exchange unit 66 may be provided in the pipe 51 (see Figs. 3 and 6), and in this case, the heat exchange unit 66 may be configured by, for example, winding a section of a part of the pipe 51 around the hydrogen gas supply pipe 14. Thereby, the hydrogen gas flowing through the hydrogen gas supply pipe 14 can be cooled by using the refrigerant that exiting the low-temperature side flow path of the heat exchanger 28 (see Fig. 3) or the refrigerant exiting the pre-cooling line 62 (see Fig. 6). Accordingly, since the hydrogen gas supplied to the dispenser 16 can be cooled, it is possible to suppress the increase in the pressure of the hydrogen receiving container 19 in a case of supplying hydrogen to the hydrogen receiving container 19 of the fuel cell vehicle or the like from the dispenser 16, and it is possible to increase the filling rate of the hydrogen in the hydrogen receiving container 19.

The direction of the flow of the hydrogen gas or the refrigerant in the heat exchange unit 66 may be, for example, as shown in Fig. 10, the forward direction with respect to the flow direction of the hydrogen gas in the hydrogen gas supply pipe 14 or, for example, as shown in Fig. 11, the backward direction with respect to the flow direction of the hydrogen gas in the hydrogen gas supply pipe 14. For example, as shown in Fig. 11, by setting the direction of the flow of the hydrogen gas or the refrigerant in the low-temperature side flow path in the heat exchange unit 66 to be backward direction with respect to the flow direction of the hydrogen gas in the hydrogen gas supply pipe 14, the hydrogen gas in the hydrogen gas supply pipe 14 can be efficiently cooled.

The present disclosure is not limited to the above-described embodiments, and includes a modification of the above-described embodiments and an appropriate combination of the embodiments.

For example, in some embodiments described above, the refrigerator of a Brayton cycle system is exemplified as the refrigerator 24, but the type of the refrigerator is not particularly limited, and may be, for example, an absorption type refrigerator.

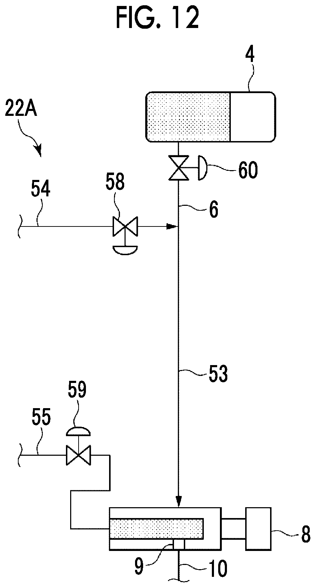

In addition, for example, as partially shown in Fig. 12, in the above-described refrigerator system 22A, one end of the cooling hydrogen gas recovery pipe 55 may be connected to the upstream of the check valve 9 in the liquid hydrogen pump 8, and the other end of the cooling hydrogen gas recovery pipe 55 may be connected to the inlet (hydrogen gas inlet) of the high-temperature side flow path of the heat exchanger 28 (see Fig. 3). As a result, in the pre-cool mode, the hydrogen gas supplied from the cooling hydrogen gas supply pipe 54 to the liquid hydrogen supply pipe 6 is recovered by the cooling hydrogen gas recovery pipe 55 passing through the liquid hydrogen pump 8 and is returned to the inlet of the high-temperature side flow path of the heat exchanger 28. Therefore, it is possible to effectively cool the liquid hydrogen supply pipe 6 and the liquid hydrogen pump 8 by using the cooling energy generated by the refrigerator 24.

**In** addition, for example, in the configuration shown in Fig. 3, the hydrogen blower 56 may be provided in the cooling hydrogen gas recovery pipe 55 instead of the cooling hydrogen gas supply pipe 54.

**In** addition, for example, in the configuration shown in Fig. 3, the liquid hydrogen supply pipe portion 53 may be at least a section of a part of the liquid hydrogen supply pipe 6 or may be the entire section of the liquid hydrogen supply pipe 6. In addition, for example, in the configuration shown in Fig. 6, the pre-cooling line 62 may be provided along at least a section of a part of the liquid hydrogen supply pipe 6, or may be provided along at least the section of a part of the liquid hydrogen supply pipe 6.

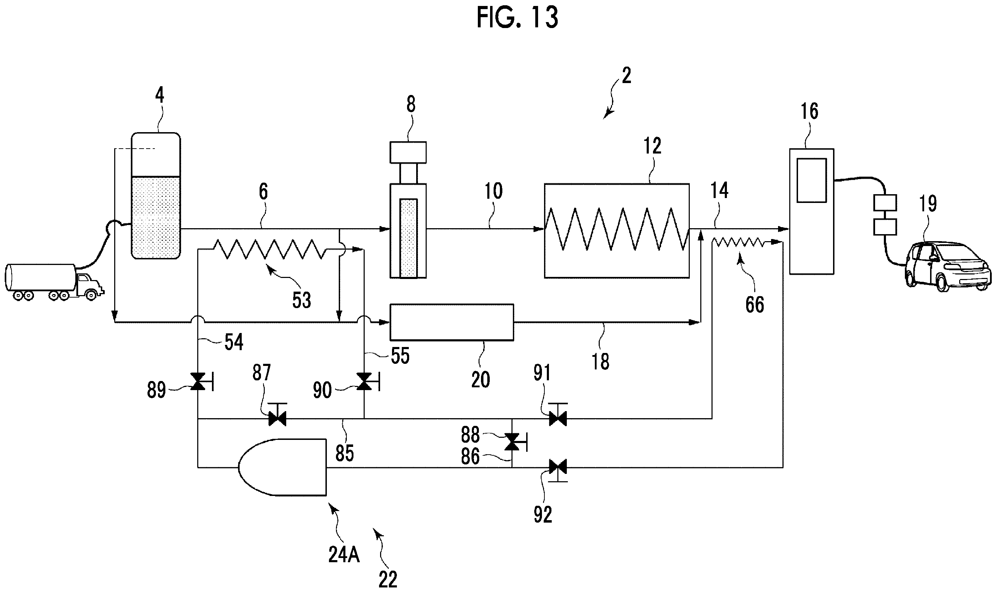

In some embodiments, in a case where the refrigerator system 22 shown in Fig. 3 is applied to the hydrogen station 2 described with reference to Figs. 9 and 10, for example, as shown in Fig. 13, the first bypass line 85, the second bypass line 86, and valves 87, 88, 89, 90, 91, and 92 may be further provided.

In this case, the first bypass line 85 connects a position of the upstream of the liquid hydrogen supply pipe portion 53 in the cooling hydrogen gas supply pipe 54 and a position of the downstream of the liquid hydrogen supply pipe portion 53 in the cooling hydrogen gas recovery pipe 55. The second bypass line 86 connects a position between the connected position of the first bypass line 85 in the cooling hydrogen gas recovery pipe 55 and the heat exchange unit 66 and a position of the downstream of the heat exchange unit 66 in the cooling hydrogen gas recovery pipe 55. The valve 87 is provided in the first bypass line 85, and the valve 88 is provided in the second bypass line 86. The valve 89 is provided between a position where the valve 89 is connected to the first bypass line 85 in the cooling hydrogen gas supply pipe 54 and the liquid hydrogen supply pipe portion 53. The valve 90 is provided between a position where the valve 90 is connected to the first bypass line 85 in the cooling hydrogen gas recovery pipe 55 and the liquid hydrogen supply pipe portion 53. The valve 91 is provided at a position of the upstream of the heat exchange unit 66 in the cooling hydrogen gas recovery pipe 55 and provided on a position of the downstream of a position where the second bypass line 86 is connected. The valve 92 is provided at a position of the downstream of the heat exchange unit 66 in the cooling hydrogen gas recovery pipe 55 and provided on a position of the upstream of a position where the second bypass line 86 is connected.

With the configuration shown in Fig. 13, the liquid hydrogen supply pipe 6 and the hydrogen gas supply pipe 14 can be simultaneously or individually cooled as necessary. For example, by closing the valves 87, 91, and 92 and opening the valves 88, 89, and 90, only the liquid hydrogen supply pipe 6 can be cooled without cooling the hydrogen gas supply pipe 14. In addition, by opening the valves 87, 91, and 92 and closing the valves 88, 89, and 90, only the hydrogen gas supply pipe 14 can be cooled without cooling the liquid hydrogen supply pipe 6.

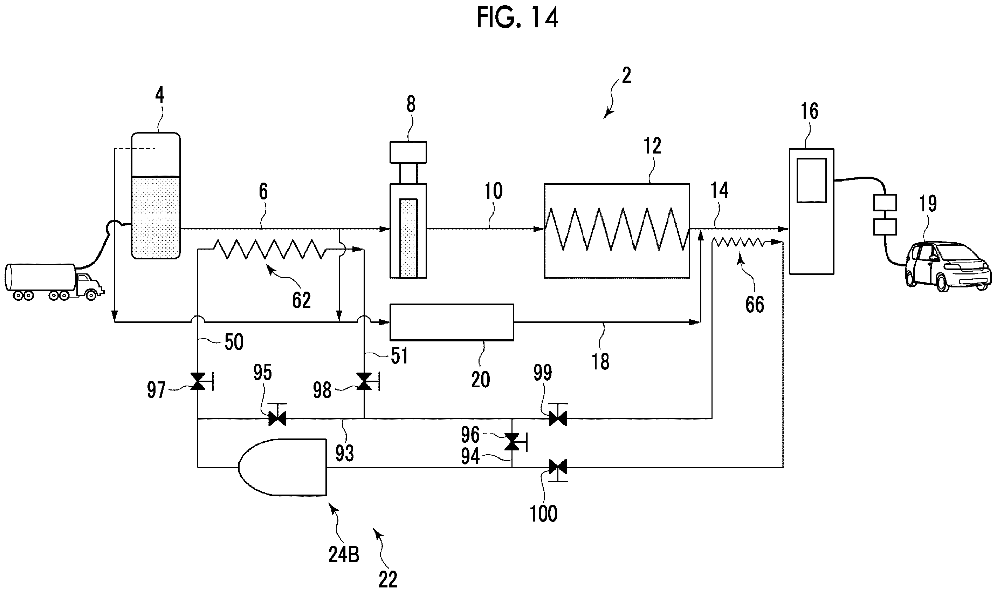

In some embodiments, in a case where the refrigerator system 22 shown in Fig. 6 is applied to the hydrogen station 2 described with reference to Figs. 9 and 11, for example, as shown in Fig. 14, the first bypass line 93, the second bypass line 94, and valves 95, 96, 97, 98, 99, and 100 may be further provided.

In this case, the first bypass line 93 connects a position of the upstream of the pre-cooling line 62 in the pipe 50 and a position of the downstream of the pre-cooling line 62 in the pipe 51. The second bypass line 94 connects a position between the connected position of the first bypass line 85 in the pipe 51 and the heat exchange unit 66 and a position of the downstream of the heat exchange unit 66 in the pipe 51. The valve 95 is provided in the first bypass line 93, and the valve 96 is provided in the second bypass line 94. The valve 97 is provided between a position where the valve 97 is connected to the first bypass line 93 in the pipe 50 and the pre-cooling line 62. The valve 98 is provided between a position where the valve 98 is connected to the first bypass line 93 in the pipe 51 and the pre-cooling line 62. The valve 99 is provided at a position of the upstream of the heat exchange unit 66 in the pipe 51 and is provided downstream of a position where the second bypass line 86 is connected. The valve 100 is provided at a position of the downstream of the heat exchange unit 66 in the pipe 51 and is provided upstream of a position where the second bypass line 94 is connected.

With the configuration shown in Fig. 14, the liquid hydrogen supply pipe 6 and the hydrogen gas supply pipe 14 can be simultaneously or individually cooled as necessary. For example, by closing the valves 95, 99, and 100 and opening the valves 96, 97, and 98, only the liquid hydrogen supply pipe 6 can be cooled without cooling the hydrogen gas supply pipe 14. In addition, by opening the valves 95, 99, and 100 and closing the valves 96, 97, and 98, only the hydrogen gas supply pipe 14 can be cooled without cooling the liquid hydrogen supply pipe 6.

The contents described in each embodiment are understood as follows, for example.

(1) A hydrogen station (for example, the hydrogen station 2 described above) according to at least one embodiment of the present disclosure includes a liquid hydrogen supply pipe (for example, the liquid hydrogen supply pipe 6 described above) for supplying liquid hydrogen from a liquid hydrogen storage tank (for example, the liquid hydrogen storage tank 4 described above) to a liquid hydrogen pump (for example, the liquid hydrogen pump 8 described above), and a refrigerator (for example, the refrigerator 24 described above), in which the liquid hydrogen supply pipe is configured to be cooled using cooling energy generated by the refrigerator.

According to the hydrogen station described in (1) above, it is possible to cool (pre-cool) the liquid hydrogen supply pipe using the cooling energy generated by the refrigerator before operating the liquid hydrogen pump. Therefore, as compared with the method of pre-cooling in the related art that the liquid hydrogen is flowed from the liquid hydrogen storage tank to the liquid hydrogen supply pipe for pre-cooling the liquid hydrogen supply pipe, it is possible to suppress the generation of the boil-off gas due to the vaporization of the liquid hydrogen in the liquid hydrogen supply pipe, and it is possible to realize high energy efficiency of the hydrogen station.

(2) In some embodiments, the hydrogen station described in (1) above may further include a circulation line (for example, the circulation line 26 described above) for circulating hydrogen gas, and a heat exchange unit (for example, the heat exchanger 28 described above) configured to cool the hydrogen gas in the circulation line using a refrigerant of the refrigerator, in which the circulation line includes a liquid hydrogen supply pipe portion (for example, the liquid hydrogen supply pipe portion 53 described above) which is a section of at least a part of the liquid hydrogen supply pipe, a cooling hydrogen gas supply pipe (for example, the cooling hydrogen gas supply pipe 54 described above) configured to supply the hydrogen gas cooled by the heat exchange unit to the liquid hydrogen supply pipe portion, and a cooling hydrogen gas recovery pipe (for example, the cooling hydrogen gas recovery pipe 55 described above) configured to recover the hydrogen gas passing through the liquid hydrogen supply pipe portion and return the hydrogen gas to the heat exchange unit.

According to the hydrogen station described in (2) above, in a case of performing the pre-cooling of the liquid hydrogen supply pipe, by circulating the hydrogen gas remaining in the liquid hydrogen supply pipe in the circulation line, the hydrogen gas can be cooled by the heat exchange unit using the refrigerant of the refrigerator, and the cooled hydrogen gas can be caused to flow into the liquid hydrogen supply pipe to cool the liquid hydrogen supply pipe. Therefore, for example, the refrigerant of the refrigerator can be prevented from affecting the downstream of the liquid hydrogen supply pipe as compared with a case where the refrigerant of the refrigerator is supplied into the liquid hydrogen supply pipe for pre-cooling the liquid hydrogen supply pipe. In addition, for example, the pre-cooling line does not need to be provided along the liquid hydrogen supply pipe as compared with a case where the pre-cooling is performed on the liquid hydrogen supply pipe by providing the pre-cooling line along the section of at least a part of the liquid hydrogen supply pipe and flowing the refrigerant of the refrigerator into the pre-cooling line (configuration of (10) described below). In a case where the pre-cooling line is provided along the liquid hydrogen supply pipe, the structure of the liquid hydrogen supply pipe is likely to be complicated and the cost is likely to be increased in order to ensure the heat insulating properties of the liquid hydrogen supply pipe. On the other hand, in the configuration of (2) above, since it is not necessary to provide the pre-cooling line along the liquid hydrogen supply pipe, it is possible to suppress the complication and the increase in cost of the structure of the liquid hydrogen supply pipe.

(3) In some embodiments, the hydrogen station described (2) above may further include a blower (for example, the hydrogen blower 56 described above) provided in the cooling hydrogen gas supply pipe or the cooling hydrogen gas recovery pipe.

According to the hydrogen station described in (3) above, the hydrogen gas can be efficiently circulated in the circulation line by the blower, and the liquid hydrogen supply pipe can be effectively cooled. As a result, it is possible to effectively suppress generation of the boil-off gas due to vaporization of the liquid hydrogen in the liquid hydrogen supply pipe, and it is possible to realize high energy efficiency of the hydrogen station.

(4) In some embodiments, the hydrogen station described in (2) or (3) further includes a cooling hydrogen gas supply valve (for example, the cooling hydrogen gas supply valve 58 described above) provided in the cooling hydrogen gas supply pipe, and a cooling hydrogen gas recovery valve (for example, the cooling hydrogen gas recovery valve 59 described above) provided in the cooling hydrogen gas recovery pipe.

According to the hydrogen station described in (4) above, the low-temperature hydrogen gas can be circulated in the circulation line by opening the cooling hydrogen gas supply valve and the cooling hydrogen gas recovery valve to perform the pre-cooling of the liquid hydrogen supply pipe. In addition, by opening the cooling hydrogen gas supply valve and the cooling hydrogen gas recovery valve, it is possible to prevent the liquid hydrogen from flowing into the cooling hydrogen gas supply pipe and the cooling hydrogen gas recovery pipe from the liquid hydrogen supply pipe in a case where the liquid hydrogen flows through the liquid hydrogen supply pipe.

(5) In some embodiments, the hydrogen station described in any one of (2) to (4) further includes a liquid hydrogen supply valve (for example, the liquid hydrogen supply valve 60 described above) that is provided upstream of a position where the cooling hydrogen gas supply pipe is connected to the liquid hydrogen supply pipe.

According to the hydrogen station described in (5) above, by controlling the liquid hydrogen supply valve to be in a closed state in a case of causing the hydrogen gas to circulate in the circulation line, the liquid hydrogen supply pipe portion can be cooled with low-temperature hydrogen gas while suppressing the generation of the boil-off gas in the liquid hydrogen supply pipe.

(6) In some embodiments, the hydrogen station described in (5) above further includes a control device (for example, the control device 23 described above) configured execute a pre-cool mode in which the liquid hydrogen supply pipe is cooled before starting operation of the liquid hydrogen pump, in which the control device is configured to, in the pre-cool mode, control the liquid hydrogen supply valve to be in a closed state, and control each of the cooling hydrogen gas supply valve and the cooling hydrogen gas recovery valve to be in an open state.

According to the hydrogen station described in (6) above, in the pre-cool mode, the liquid hydrogen supply valve is controlled to be in a closed state, and each of the cooling hydrogen gas supply valve and the cooling hydrogen gas recovery valve is controlled to be in an open state, so that it is possible to circulate low-temperature hydrogen gas in the circulation line while suppressing the generation of boil-off gas in the liquid hydrogen supply pipe and to perform pre-cooling of the liquid hydrogen supply pipe.

(7) In some embodiments, in the hydrogen station described in (6) above, in which the control device is configured to, in the pre-cool mode, operate the blower in a state where the operation of the liquid hydrogen pump is stopped.

According to the hydrogen station described in (7) above, the hydrogen gas can be efficiently circulated in the circulation line by the blower in the pre-cool mode, and the liquid hydrogen supply pipe can be effectively cooled. As a result, it is possible to effectively suppress generation of the boil-off gas due to vaporization of the liquid hydrogen in the liquid hydrogen supply pipe, and it is possible to realize high energy efficiency of the hydrogen station.

(8) In some embodiments, the hydrogen station described in any one of the above (2) to (7) further includes a hydrogen gas supply pipe (for example, the hydrogen gas supply pipe 14 described above) that connects an evaporator (for example, the evaporator 12 described above) for evaporating the liquid hydrogen discharged from the liquid hydrogen pump and a dispenser (for example, the dispenser 16 described above) for supplying the hydrogen gas generated by evaporating the liquid hydrogen in the evaporator to a hydrogen receiving container (for example, the hydrogen receiving container 19 described above), and a heat exchange unit (for example, the heat exchange unit 66 described above) configured to cool the hydrogen gas flowing through the hydrogen gas supply pipe by using the hydrogen gas recovered from the liquid hydrogen supply pipe portion or the refrigerant that has exited the heat exchange unit.

According to the hydrogen station described in (8) above, since the hydrogen gas supplied to the dispenser can be cooled, it is possible to suppress an increase in pressure of the hydrogen receiving container in a case of supplying hydrogen to the hydrogen receiving container of the fuel cell vehicle or the like from the dispenser, and it is possible to increase the filling rate of the hydrogen into the hydrogen receiving container.

(9) In some embodiments, in the hydrogen station described in any one of (2) to (8), in which in a case where a length of the liquid hydrogen supply pipe from the liquid hydrogen storage tank to the liquid hydrogen pump is denoted by L1 and a length of the liquid hydrogen supply pipe portion is denoted by L2, L2/L1 > 0.5 is satisfied.

According to the hydrogen station described in (9) above, in a case of performing the pre-cooling of the liquid hydrogen supply pipe, the length of the section cooled by the hydrogen gas in the liquid hydrogen supply pipe can be increased, and the liquid hydrogen supply pipe can be efficiently cooled.

(10) In some embodiments, in the hydrogen station described in (1) above, the refrigerator includes a pre-cooling line (for example, the pre-cooling line 62 described above) provided along a section of at least a part of the liquid hydrogen supply pipe, and is configured to cool the liquid hydrogen supply pipe by flowing a refrigerant through the pre-cooling line.

According to the hydrogen station described in (10) above, it is not necessary to provide a circulation line or the like for hydrogen gas as compared with the configuration described in (2) above. Therefore, it is possible to suppress an increase in size of equipment for performing the pre-cooling of the liquid hydrogen supply pipe. In addition, for example, the refrigerant of the refrigerator can be prevented from affecting the downstream of the liquid hydrogen supply pipe as compared with a case where the refrigerant of the refrigerator is supplied into the liquid hydrogen supply pipe for pre-cooling the liquid hydrogen supply pipe.

(11) In some embodiments, in the hydrogen station described in (10) above, in a case where a length of the liquid hydrogen supply pipe from the liquid hydrogen storage tank to the liquid hydrogen pump is denoted by L1, and a length of the section of the liquid hydrogen supply pipe provided with the pre-cooling line is denoted by L3, L3/L1 > 0.5 is satisfied.

According to the hydrogen station described in (11) above, in a case of performing the pre-cooling of the liquid hydrogen supply pipe, the length of the section cooled by the pre-cooling line in the liquid hydrogen supply pipe can be increased, and the liquid hydrogen supply pipe can be efficiently cooled.

(12) In some embodiments, the hydrogen station described in (10) or (11) above includes a hydrogen gas supply pipe (for example, the hydrogen gas supply pipe 14 described above) that connects an evaporator (for example, the evaporator 12 described above) for evaporating the liquid hydrogen discharged from the liquid hydrogen pump and a dispenser (for example, the dispenser 16 described above) for supplying the hydrogen gas generated by evaporating the liquid hydrogen in the evaporator to a hydrogen receiving container (for example, the hydrogen receiving container 19 described above), and a heat exchange unit (for example, the heat exchange unit 66 described above) configured to cool the hydrogen gas flowing through the hydrogen gas supply pipe by using the refrigerant after passing through the pre-cooling line.

According to the hydrogen station described in (12) above, since the hydrogen gas supplied to the dispenser can be cooled, it is possible to suppress an increase in pressure of the hydrogen receiving container in a case of supplying hydrogen to the hydrogen receiving container of the fuel cell vehicle or the like from the dispenser, and it is possible to increase the filling rate of the hydrogen into the hydrogen receiving container.

(13) A refrigerator system for a hydrogen station (for example, the refrigerator system 22A described above) according to at least one embodiment of the present disclosure is a refrigerator system for a hydrogen station that cools a liquid hydrogen supply pipe (for example, the liquid hydrogen supply pipe 6 described above) of the hydrogen station (for example, the hydrogen station 2 described above), the refrigerator system includes a refrigerator (for example, the refrigerator 24 described above), a first heat exchange unit (for example, the heat exchanger 28 described above) configured to cool hydrogen gas by exchanging heat with a refrigerant of the refrigerator, a cooling hydrogen gas supply pipe (for example, the cooling hydrogen gas supply pipe 54 described above) configured to supply the hydrogen gas cooled by the heat exchange unit to the liquid hydrogen supply pipe, and a cooling hydrogen gas recovery pipe (for example, the cooling hydrogen gas recovery pipe 55 described above) configured to recover the hydrogen gas passing through the liquid hydrogen supply pipe and return the hydrogen gas to the heat exchange unit.

According to the refrigerator system for a hydrogen station according described in (13) above, in a case of performing pre-cooling of the liquid hydrogen supply pipe, the hydrogen gas remaining in the liquid hydrogen supply pipe is cooled by heat exchange with the refrigerant of the refrigerator in the heat exchange unit, and the cooled hydrogen gas is supplied from the cooling hydrogen gas supply pipe to the liquid hydrogen supply pipe, so that the liquid hydrogen supply pipe can be cooled. Therefore, as compared with the method of pre-cooling in the related art that the liquid hydrogen is flowed from the liquid hydrogen storage tank to the liquid hydrogen supply pipe for pre-cooling the liquid hydrogen supply pipe, it is possible to suppress the generation of the boil-off gas due to the vaporization of the liquid hydrogen in the liquid hydrogen supply pipe, and it is possible to realize high energy efficiency of the hydrogen station.

In addition, for example, the refrigerant of the refrigerator can be prevented from affecting the downstream of the liquid hydrogen supply pipe as compared with a case where the refrigerant of the refrigerator is supplied into the liquid hydrogen supply pipe for pre-cooling the liquid hydrogen supply pipe. In addition, for example, the pre-cooling line does not need to be provided along the liquid hydrogen supply pipe as compared with a case where the pre-cooling is performed on the liquid hydrogen supply pipe by providing the pre-cooling line along the section of at least a part of the liquid hydrogen supply pipe and flowing the refrigerant of the refrigerator into the pre-cooling line (configuration of (10) described above). In a case where the pre-cooling line is provided along the liquid hydrogen supply pipe, the structure of the liquid hydrogen supply pipe is likely to be complicated and the cost is likely to be increased in order to ensure the heat insulating properties of the liquid hydrogen supply pipe. On the other hand, in the configuration of (13) above, since it is not necessary to provide the pre-cooling line along the liquid hydrogen supply pipe, it is possible to suppress the complication and the increase in cost of the structure of the liquid hydrogen supply pipe. Reference Signs List

2: hydrogen station
4: liquid hydrogen storage tank
6: liquid hydrogen supply pipe
8: liquid hydrogen pump
10: liquid hydrogen supply pipe
12: evaporator
14: hydrogen gas supply pipe
16: dispenser
18: BOG recovery line
19: hydrogen receiving container
20, 42: compressor
22, 22A, 22B: refrigerator system
23: control device
24: refrigerator
26: circulation line
28: heat exchanger (heat exchange unit or first heat exchange unit)
30: turbine unit
32: water-cooled heat exchanger
34: regenerative heat exchanger
40: motor
44: expansion turbine
46, 48, 49, 50, 51, 52: pipe
53: liquid hydrogen supply pipe portion
54: cooling hydrogen gas supply pipe
55: cooling hydrogen gas recovery pipe
56: hydrogen blower
58: cooling hydrogen gas supply valve
59: cooling hydrogen gas recovery valve
60: liquid hydrogen supply valve
62: pre-cooling line
63: inner pipe
64: outer pipe
66: heat exchanger (second heat exchange unit)
72: processor
74: RAM
76: ROM
78: HDD
80: input I/F
82: output I/F
84: bus
85, 93: first bypass line
86, 94: second bypass line
87, 88, 89, 90, 91, 92, 95, 96, 97, 98, 99, 100: valve

## Claims

1. A hydrogen station comprising:
a liquid hydrogen supply pipe for supplying liquid hydrogen from a liquid hydrogen storage tank to a liquid hydrogen pump; and
a refrigerator,
wherein the liquid hydrogen supply pipe is configured to be cooled using cooling energy generated by the refrigerator.

2. The hydrogen station according to claim 1, further comprising:
a circulation line for circulating hydrogen gas; and
a first heat exchange unit configured to cool the hydrogen gas in the circulation line using a refrigerant of the refrigerator,
wherein the circulation line includes
a liquid hydrogen supply pipe portion which is a section of at least a part of the liquid hydrogen supply pipe,
a cooling hydrogen gas supply pipe configured to supply the hydrogen gas cooled by the first heat exchange unit to the liquid hydrogen supply pipe portion, and
a cooling hydrogen gas recovery pipe configured to recover the hydrogen gas passing through the liquid hydrogen supply pipe portion and return the hydrogen gas to the first heat exchange unit.

3. The hydrogen station according to claim 2, further comprising:
a blower provided in the cooling hydrogen gas supply pipe or the cooling hydrogen gas recovery pipe.

4. The hydrogen station according to claim 3, further comprising:
a cooling hydrogen gas supply valve that is provided in the cooling hydrogen gas supply pipe; and
a cooling hydrogen gas recovery valve that is provided in the cooling hydrogen gas recovery pipe.

5. The hydrogen station according to claim 4, further comprising:
a liquid hydrogen supply valve that is provided upstream of a position where the cooling hydrogen gas supply pipe is connected to the liquid hydrogen supply pipe.

6. The hydrogen station according to claim 5, further comprising:
a control device configured to execute a pre-cool mode in which the liquid hydrogen supply pipe is cooled before starting operation of the liquid hydrogen pump,
wherein the control device is configured to, in the pre-cool mode, control the liquid hydrogen supply valve to be in a closed state, and control each of the cooling hydrogen gas supply valve and the cooling hydrogen gas recovery valve to be in an open state.

7. The hydrogen station according to claim 6,
wherein the control device is configured to, in the pre-cool mode, operate the blower in a state where the operation of the liquid hydrogen pump is stopped.

8. The hydrogen station according to claim 2, further comprising:
a hydrogen gas supply pipe that connects an evaporator for evaporating the liquid hydrogen discharged from the liquid hydrogen pump and a dispenser for supplying the hydrogen gas generated by evaporating the liquid hydrogen in the evaporator to a hydrogen receiving container; and
a second heat exchange unit configured to cool the hydrogen gas flowing through the hydrogen gas supply pipe by using the hydrogen gas recovered from the liquid hydrogen supply pipe portion or the refrigerant that has exited the first heat exchange unit.

9. The hydrogen station according to claim 2,
wherein in a case where a length of the liquid hydrogen supply pipe from the liquid hydrogen storage tank to the liquid hydrogen pump is denoted by L1 and a length of the liquid hydrogen supply pipe portion is denoted by L2, L2/L1 > 0.5 is satisfied.

10. The hydrogen station according to claim 1,
wherein the refrigerator includes a pre-cooling line provided along a section of at least a part of the liquid hydrogen supply pipe, and is configured to cool the liquid hydrogen supply pipe by flowing a refrigerant through the pre-cooling line.

11. The hydrogen station according to claim 10,
wherein in a case where a length of the liquid hydrogen supply pipe from the liquid hydrogen storage tank to the liquid hydrogen pump is denoted by L1, and a length of the section of the liquid hydrogen supply pipe provided with the pre-cooling line is denoted by L3, L3/L1 > 0.5 is satisfied.

12. The hydrogen station according to claim 10, further comprising:
a hydrogen gas supply pipe that connects an evaporator for evaporating the liquid hydrogen discharged from the liquid hydrogen pump and a dispenser for supplying the hydrogen gas generated by evaporating the liquid hydrogen in the evaporator to a hydrogen receiving container; and
a heat exchange unit configured to cool the hydrogen gas flowing through the hydrogen gas supply pipe by using the refrigerant after passing through the pre-cooling line.

13. A refrigerator system for a hydrogen station for cooling a liquid hydrogen supply pipe of a hydrogen station, the refrigerator system comprising:
a refrigerator;
a first heat exchange unit configured to cool hydrogen gas by exchanging heat with a refrigerant of the refrigerator;
a cooling hydrogen gas supply pipe configured to supply the hydrogen gas cooled by the first heat exchange unit to the liquid hydrogen supply pipe; and
a cooling hydrogen gas recovery pipe configured to recover the hydrogen gas passing through the liquid hydrogen supply pipe and return the hydrogen gas to the first heat exchange unit.
